# EUROPEAN PATENT SPECIFICATION

(11) **EP 0 635 979 B1**
(45) Date of publication and mention of the grant of the patent: **11.10.2000**
(21) Application number: 94111568.5
(22) Date of filing: 22.07.1994
(51) Int. Cl.: H04N 7/087

(54) **Teletext signals receiver with viewing duration control of the rolling pages**
Teletextsignalempfänger mit Anschaudauersteuerung der vorbeirollenden Seiten
Récepteur de signaux télétexte muni d'un système de commande de la durée d'exposition des pages révolvantes

(30) Priority: 23.07.1993 IT RM930494
(43) Date of publication of application: 25.01.1995
(73) Proprietor: EDICO S.r.l., I-00197 Roma (IT)
(72) Inventor: d'Errico, Federico, I-00186 Roma (IT)

(56) References cited:
- EP-A- 0 290 000
- EP-A- 0 445 715
- EP-A- 0 504 721
- EP-A- 0 529 700

## Description

The present invention relates to a Teletext signals receiver, under the form of a plurality of pages, inserted in the television signal, that can be of the static type, i.e. single pages, or of the file-page type, i.e. each made up of a plurality of sub-pages, that are substituted over time during the transmission cycle.

As is known the main problem with teletext reception is the difficulty that characterises the selection of the pages that one wishes to consult.

Some means have been found for limiting a part of such difficulties; various modified teletext transmission systems have been proposed (the FLOP system, the TOP system, etc.); increasingly sophisticated decoders have been developed.

However one of the greatest inconveniences is that of the so called rolling pages; that are actually files of sub-pages, in reality the page number identifies the file and not the single sub-page; it is not therefore possible to directly select a single sub-page (i.e. to give a command that immediately makes it available without having to wait for the other sub-pages of the file to be received first, existing between that being transmitted in that moment and that desired by the user; in fact even the use of the "time" key does not remove the fact that one has to wait until the sub-page is transmitted); it is noted that the single sub-pages are substituted one with the other in the transmission cycle over an established time, for example one every 20 seconds.

As an example, which we may assume refers to the Italian teletext, named Televideo by the RAI. It is supposed that page 677 is selected, which is a file-page of 6 sub-pages. At the moment in which the page is acquired by the decoder sub-page n. 2 is actually being transmitted; after approximately 20 seconds it is substituted by sub-page n. 3; after another 20 seconds by sub-page n. 4 and so on.

The user may find himself in a situation in which he has not finished reading the sub-page 2, which is automatically substituted by the successive; the user therefore has to read the 3rd, then the 4th, then the 5th, then the 6th, then the 1st, finally, he can finish reading the 2nd, that he had not finished reading before. It is true that with the STOP (or HALT) key it is possible to stop the rotation; but when the STOP is removed, the sub-page present in that moment of the cycle is acquired; it would therefore occur that, if the user had blocked the sub-page 2 at the beginning of the present example, upon releasing it he would have found the sub-page 4 or 5; the remedy in this case can be worse than the cause.

The problem is increased by the fact that today the greater part of pages are files: in Televideo more than a third of pages are files and less than a third are static. As previously mentioned there are files of up to 16 sub-pages, and there is word of increasing the maximum number of sub-pages in a file.

The difficulty of such a situation is clear. It has been proposed (note the article "Teletext Multi-page System mit TPU 2700", Elektronic, vol. 34, N. 12, 14-6-1985) that if the user selects a file page, the decoder automatically provides for storing the relative sub-pages in a memory (up to a maximum of 7) as soon as they are received; said sub-pages stored in a memory can be "flipped through" by the user.

This system is without doubt much more satisfactory, however it also has some drawbacks, from among which it is to be mentioned, being as the memory is of 8 pages only, the fact of occupying 7 for the sub-pages therefore prevents the storing of other pages normally stored in the memory, such as the following page, the index page of the successive group, and so on; for overcoming this situation it would be necessary to increase the number of pages that can be stored with a consequent increase in the cost of the receiver.

Neither can this system be considered ideal for the user; and the invention is based on the acknowledgement of this fact.

It is known from EP-A-0290000 a teletext signal receiver wherein, besides freezing the displayed revolving page, the next ones are memorized, so to be later, available for consulting.

It is further known from EP-A-0445715 a teletext signal receiver, wherein the sub-pages are memorized in a suitable memory together with a corresponding time duration to be indicated by the user during a programming dialog.

Also these known solutions do not represent a complete and simple solution to the problem; in fact both require a big memory for memorizing all the possible subpages of a file-page, and, according to EP-A-0445715, a special time consuming programming by the user is necessary.

The aim of the present invention is therefore that of indicating a teletext transmission-reception system being more advantageous than those known, which is able to avoid or reduce the aforementioned drawbacks, in relation with the consultation of rolling pages.

For allowing such aims the present invention has as its subject a teletext signal receiver as described in the attached claim 1.

Further aims and advantages of the present invention shall result in being clear from the following detailed description and the annexed drawings, supplied purely as an explanatory and non-limiting example; wherein:
figure 1 schematically represents a part of the electrical circuit of a receiver of teletext transmission;
figure 2 schematically represents a significant part of the logic circuit of the control unit of figure 1.

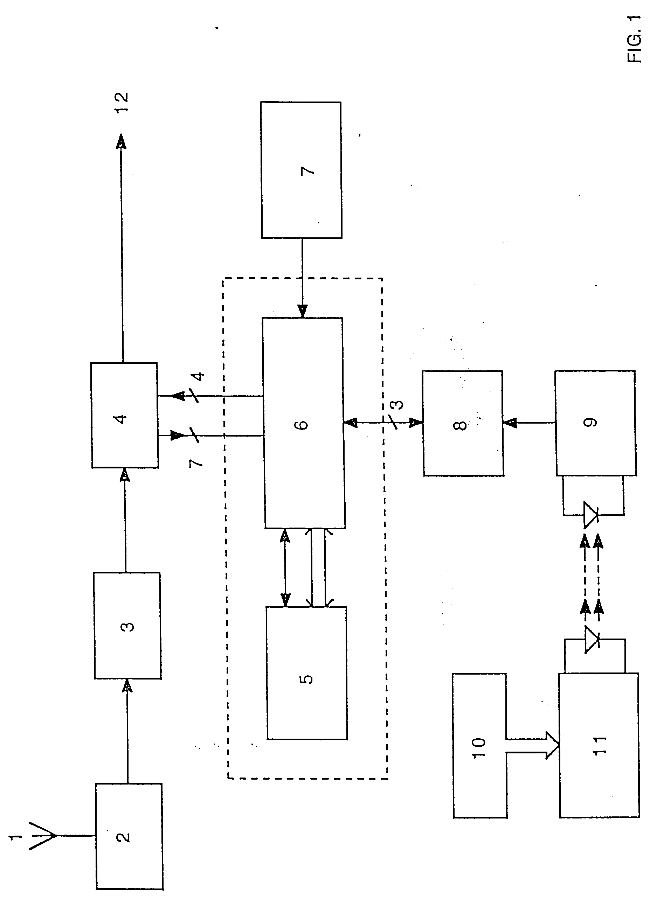

In figure 1 reference number 1 indicates a receiving antenna, connected to a television receiver for capturing the transmissions of television signals, containing the teletext signals. Said antenna is connected to a conventional tuner, indicated with reference number 2; said tuner is followed by an amplifier of intermediate frequency signals, also being conventional, comprising a video detector, indicated with number 3.

The amplifier 3 supplies in output the composite video signal and is connected to an amplifying circuit and a video signal elaborator indicated with reference number 4; the elaborating circuit 4 can be for example of the VCU 2133 type by ITT, which carries out the analogue to digital conversion and the digital to analogue re-conversion of the signal; at the output (reference number 12) of circuit 4 three signals R,G,B (red, green, blue) are available for the image display device (colour television screen, not represented in the figure).

The elaborator circuit 4 is connected, by way of two multiwire connections, to a teletext signals decoding circuit, indicated with reference number 6; such circuit 6 can be for example of the TPU 2732 type by ITT, or an equivalent circuit by another producer.

The decoder circuit 6 comprises:
- a data acquisition unit, that receives the digital video input signal, coming from circuit 4;
- a RAM memory that serves as a buffer of the teletext page to be displayed;
- a control unit of the eight page external memory indicated with number 5;
- a character generator and a viewing control circuit;
- a timing unit, that receives the clock signal from the clock generating circuit, indicated with reference number 7, that can be for example of the MCU 2632 type
- an interface for the bus coming from the central control unit 8.

The teletext data acquisition begins in the 7th television line and finishes on line 22, the teletext information is synchronised and identified; a comparator pre-selects the pages, the numbers of which have been requested by the control unit 8, and charges them in the memory 5; the internal memory is used as a buffer.

The display begins on line 48 and finishes on line 286; the decoder selects one of the eight pages in the memory for display; the 8 bit words (characters) are transformed in a 6x10 point matrix by the character generator and are displayed in 24 lines of 40 characters each.

Circuit 6 receives the commands from the unit 8 by way of an appropriate bus.

The external memory 5 of 64 Kbit is organised in 8 sectors of 8 Kbit each; each sector memorises a page and is organised in 25 lines of 40 bytes each, plus a line of 24 bytes; lines 0-23 represent the 24 lines of the teletext page to be displayed; line 25 of every sector is used for the control information of the relative sector, while lines 24 of the sectors zero and one contain general control information and the rolling header respectively.

The central control unit, indicated with reference number 8, can be for example of the type CCU 2030 by ITT, or another logic control circuit comprising a suitable microprocessor and an appropriate program of operative instructions. Said central control unit is connected to, apart from circuit 6, an amplifying circuit, indicated with reference number 9, that acts as a receiver of signals of infrared rays, coming from a remote control unit, indicated with reference number 11; the latter is in turn connected to command keyboard, indicated with reference number 10.

The commands given by the user, by way of the keyboard 10, through the transmitter 11 and the receiver 9, reach the control unit 8, that provides for decoding such commands and to supply the appropriate control signals to the circuit 6.

In the case of the receiver of figure 1 being in line with that described in the mentioned article, in the case of selecting a file-page, as for instance page 677 of Televideo by RAI, the decoder would provide for gradually memorising in the memory 5 the sub-pages 2,3,4,5,6 and 1, thus occupying 6 of the available page memories, while the user can only read one at a time.

Upon acquisition the decoder is able to differentiate as to whether the page is rolling (i.e. part of a file), the number of pages of which the file is composed and the number of that particular sub-page; such data is contained in two bytes, contained in the line 1 of the page that define "the rolling index", i.e. the number of the sub-page, followed by the total number of sub-pages of the file (for example 11/16 if dealing with the sub-page 11 of a file of 16 pages); this data is also that visible on the image; moreover, in Televideo by RAI, the sub-page number (11) is also contained in line zero, i.e. in the page heading, that is not displayed.

According to the invention it is therefore proposed that:
- the display duration of the rolling pages be proportional to the number of characters contained within, and not fixed (bound to the transmission cycle duration);
- only two/three of the 8 available page memories be dedicated to the memorisation of the rolling pages; more in detail it is proposed to initially memorise the page that is present in the cycle in the instant in which the Televideo page 677 is selected; let us say that it is page 2.

Page 2 is therefore acquired, memorised and displayed.

The user starts to read the page, as it remains on the screen, as mentioned above, for a time being proportional to the number of characters contained on the page itself, it is assumed that the user is able to read the entire page before it is substituted on the screen.

The receiver provides for memorising page 3 as soon as it appears in the cycle, in the second page memory (in the meantime the user can continue to read page 2).

Once passed the allotted amount of time (proportional to the number of characters on the page) the receiver provides for:
- displaying page 3;
- freeing the memory containing page 2;
- acquire and store in its place the successive page 4 as soon as it appears in the cycle.

In this way the user has the availability of a time being proportional to the contents to be read, without excessively complicating the memory management, or having to use larger and more expensive memories.

Furthermore in this way it overcomes a possible drawback which may have delayed the reading (a momentary loss of attention); it is also possible to partly overcome the fact that a user be a slow reader; for example let us suppose that a user requires 25 seconds to read a page, while the cyclic time is 20 seconds; in this way a delay of 5 seconds per page is accumulated, that in the case of 2 page memories does however permit the reading of 4 rolling pages, and in the case of 3 page memories, permits the reading of 8/9 rolling pages.

The receiver according to the invention represents an advantageous compromise of the users needs and the cost of the apparatus.

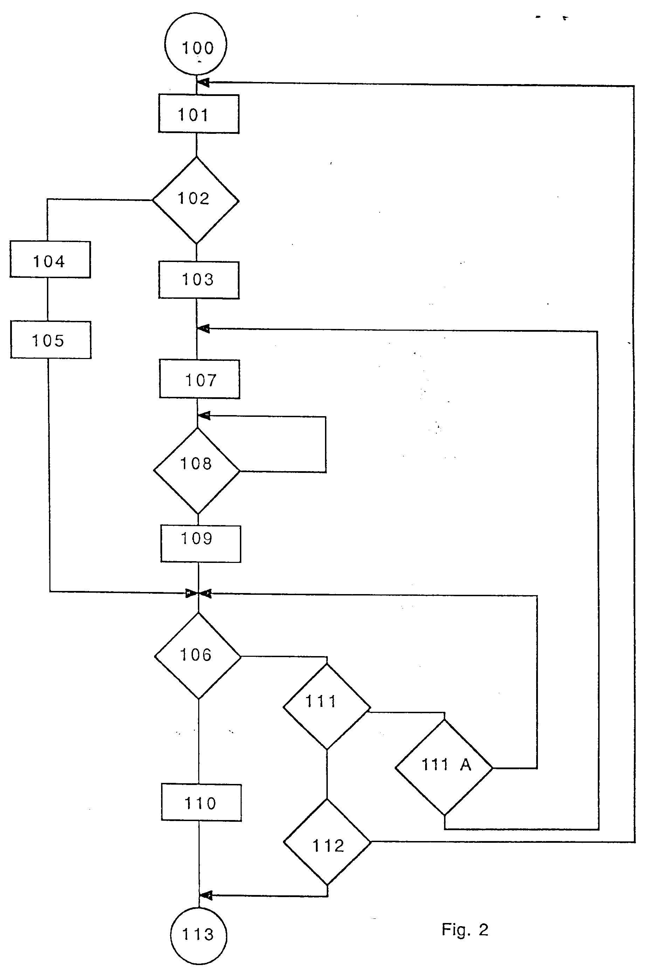

For a clearer understanding, figure 2 schematically represents in a simplified manner (the interaction between the parts described and the other parts of the circuit have not been considered) a part of the logic circuit of the central control unit 8, that allows for realising that described above.

Such circuit can be indifferently realised with the cabled logic system or with the programmed logic system, i.e. using a microprocessor; such second system is generally less expensive, also because normally televisions and video recorders already contain one or more microprocessors.

Block 100 is the starting block of the operation of storing the sub-pages of the file-pages selected by the user; control then passes to the successive block 101.

Block 101 provides for acquiring the page number chosen by the user (for example the number inputted on the keyboard of the remote control unit 10); it is supposed that the number is 677. Control passes to the successive block 102.

Block 102 is a control block; it controls whether the requested page is a file page; in the affirmative case control passes to block 103; in the negative case control passes to block 104 (in all the control blocks the lower output is the YES output; the lateral output is the NO output).

Block 104 provides for resetting the flag of the rolling pages and orders the decoder to display the requested page as soon as it has been acquired, it passes control to block 105. Block 105 provides for arranging that the "successive page" key selects, in the memory 5, the successive page to that requested. Control then passes to block 106.

Block 103 provides for setting the flag of the rolling page and to order the decoder 6 to acquire and store (in the memory 5, in a cell that we shall call the first cell) the cyclic sub-page of the requested file (677), and to display it on the screen. Control passes to block 107.

Block 107 provides for:
- zeroing the page viewing time meter (T);
- counting the characters (there are N said characters) of the text of the displayed page (contained in said first cell of the memory 5);
- ordering the decoder 6 to acquire and store in another cell, that we shall call the second cell, of the memory 5 the successive rolling page as soon as it is transmitted;
control then passes to block 108.

Block 108 is a control block; it controls whether the time (T) passed from the beginning of the display of page 2 has reached the established value (proportional to the number N of characters contained); in the positive case control passes to block 109, in the negative case control passes back to block 108.

Block 109 provides for ordering the decoder 6 to interrupt the display of the page contained in said first cell of the memory 5 and to send to the display the page contained in the second cell of the memory; and to move as a consequence the pointers associated to the first and to the second cells of said memory (that which was the first cell is now the second and vice-versa). Control passes to block 106.

Block 106 is a control block; it controls whether the "successive page" key has been pressed on the remote control device 10; in the affirmative case control passes to block 110; in the negative case control passes to block 111.

Block 110 provides for ordering the decoder 6 to select and display, in the appropriate cell of the memory, the page pointed by the "successive page" key and as a consequence move the pointers associated with the "Successive page" and "previous page". Control passes to block 113.

Block 111 is a control block; it controls whether a command being different from the "successive page" has been inputted on the remote control device 10; in the affirmative case control passes to 112; in the negative case control passes to block 111A.

Block 111A is a control block; it controls whether the rolling page flag has been set; in the affirmative case control passes to block 107; in the negative case control passes to block 106.

Block 112 is a control block; it controls whether a command being different from a new page number has been inputted on the remote control device 10; in the affirmative case control passes to block 113; in the negative case control passes back to block 101.

Block 113 is the final block of the end of the operation; control can go back to the starting block 100 or to another similar operating block of the control circuit.

The characteristics of the teletext signals receiver described result in being clear from the given description and annexed drawings.

From the given description the advantages of the receiver subject of the present invention also result in being clear. In particular they consist in the fact that the needs of the user and the cost of the apparatus result in being the most favourable.

It is clear that the described receiver of teletext signals is more advantageous than those known; it is obvious that, remaining with the principles of the invention, numerous variants are possible to the characteristics of the receiver described as an example, without departing from the scope of novelty inherent in the inventive idea, as is also clear that the apparatus utilised in connection with the described system in a practical realisation may have varied specific characteristics and that the components utilised can be substituted with technically equivalent elements.

## Claims

1. Teletext signal receiver, for receiving a plurality of pages, inserted in the television signal, said pages being of the static type, or of the file-type, where each page is made up of a plurality of subpages, that are substituted over time during the transmission cycle,
characterised in that, in order to allow for automatically adjusting the viewing duration of a subpage of the chosen file-page, the receiver comprises means for performing the following method steps:
a) the subpage being transmitted, is displayed and memorized in a free page memory;
b) the number of characters that make up the text of the displayed sub-page is counted and a time duration is calculated for the displayed subpage to be kept on display, said time duration being proportional to the number of the counted characters, according to a predetermined number of characters/time factor;
c) as soon as a next subpage is transmitted, it is acquired and memorized in another free page memory;
d) as soon as the calculated time is passed, the display of the displayed subpage is interrupted and the corresponding page memory is freed;
e) the next subpage is displayed;
f) steps b) to e) are repeated until a command by the user is received.

2. Teletext signal receiver, according to claim 1,
characterized in that said means for performing the method steps is a microprocessor (8) contained in said receiver.

## Patentansprüche

1. Teletext-Signalempfänger zum Empfangen einer Mehrzahl von Seiten, weiche in das Fernsehsignal eingefügt sind, wobei die Seiten vom statischen Typ oder vom Datei-Typ sind, wobei jede Seite aus einer Mehrzahl von Unter-Seiten gebildet ist, die zeitlich während des Sendezyklus' verteilt sind,
dadurch gekennzeichnet, dass zum Ermöglichen einer automatischen Anpassung der Betrachtungsdauer einer Unter-Seite der ausgewählten Datei-Seite der Empfänger eine Einrichtung zum Ausführen der folgenden Verfahrensschritte umfasst:
a) die gesendete Unter-Seite wird angezeigt und in einem freien Seitenspeicher gespeichert;
b) die Anzahl der Zeichen, die den Text auf der angezeigten Unter-Seite bilden, wird gezählt und eine zeitliche Dauer, für welche die angezeigte Unter-Seite auf dem Bildschirm bleibt, wird errechnet, wobei die zeitliche Dauer proportional zu der Anzahl der gezählten Zeichen ist, entsprechend einer vorbestimmten Anzahl von Zeichen/Zeitfaktor;
c) sobald eine nächste Unter-Seite gesendet wird, wird sie erfasst und in einem anderen freien Seitenspeicher gespeichert;
d) sobald die berechnete Zeit verstrichen ist, wird die Anzeige der angezeigten Unter-Seite unterbrochen und die entsprechende Speicher-Seite wird freigegeben;
e) die nächste Unter-Seite wird angezeigt;
f) die Schritte b) bis e) werden wiederholt, bis ein Befehl von dem Benutzer empfangen wird.

2. Teletext-Signalempfänger nach Anspruch 1,
dadurch gekennzeichnet, dass die Einrichtung zum Ausführen des Verfahrens ein in dem Empfänger enthaltener Mikroprozessor (8) ist.

## Revendications

1. Récepteur de signaux télétexte, pour recevoir une pluralité de pages, insérées dans le signal de télévision, lesdites pages étant du type statique, ou du type fichier, dans lequel chaque page est constituée d'une pluralité de sous-pages, qui sont remplacées au cours du temps pendant le cycle de transmission, caractérisé en ce que, afin de permettre l'ajustement automatique de la durée d'affichage d'une sous-page du fichier-page choisi, le récepteur comprend un moyen pour effectuer les étapes de procédé suivantes :
a) la sous-page étant transmise est affichée et mémorisée dans une mémoire de page libre ;
b) le nombre de caractères qui constituent le texte de la sous-page affichée est compté et une durée est calculée pour que la sous-page affichée soit maintenue à l'écran, ladite durée étant proportionnelle au nombre de caractères comptés, suivant un facteur nombre de caractères/temps prédéfini ;
c) dès qu'une sous-page suivante est transmise, elle est acquise et mémorisée dans une autre mémoire de page libre ;
d) dès que le temps calculé est écoulé, l'affichage de la sous-page affichée est interrompu et la mémoire de page correspondante est libérée ;
e) la sous-page suivante est affichée ;
f) les étapes b) à e) sont répétées jusqu'à ce qu'une commande de l'utilisateur soit reçue.

2. Récepteur de signaux télétexte, selon la revendication 1, caractérisé on ce que ledit moyen pour effectuer les étapes de procédé est un microprocesseur (8) contenu dans ledit récepteur.
